# EUROPÄISCHE PATENTSCHRIFT

(11) **EP 3 582 665 B1**
(45) Veröffentlichungstag und Bekanntmachung des Hinweises auf die Patenterteilung: **13.01.2021**
(21) Anmeldenummer: 18708061.9
(22) Anmeldetag: 16.02.2018
(51) Int. Cl.: A47J 43/28

(54) **VORRICHTUNG ZUM GREIFEN EINES OBJEKTS**
DEVICE FOR GRIPPING AN OBJECT
DISPOSITIF DE PRÉHENSION D'UN OBJET

(30) Priorität: 17.02.2017 DE 102017103291
(43) Veröffentlichungstag der Anmeldung: 25.12.2019
(73) Patentinhaber: Kleinofen, Richard, 40489 Düsseldorf (DE)
(72) Erfinder: Kleinofen, Richard, 40489 Düsseldorf (DE)
(74) Vertreter: karo IP
(86) Internationale Anmeldenummer: PCT/EP2018/053857
(87) Internationale Veröffentlichungsnummer: WO 2018/149953

(56) Entgegenhaltungen:
- US-A- 4 095 832
- US-A1- 2006 181 094
- US-B1- 7 344 171
- US-B1- 8 672 373

## Beschreibung

Die Erfindung betrifft eine Vorrichtung zum Greifen und Rotieren eines Objekts. Insbesondere betrifft die Erfindung eine Vorrichtung zum Greifen und Drehen von Grillgut.

In verschiedensten Bereichen können Werkzeuge wie Zangen zur Handhabung von Objekten eingesetzt werden. Zangen werden insbesondere zum Greifen von Objekten verwendet. Im Lebensmittelbereich ist es etwa bekannt, Lebensmittel auf einem Grill mit einer Grillzange zu greifen und zu bewegen. Die meisten bekannten Vorrichtungen zum Greifen von Objekten ermöglichen jedoch, eine Greiftaktion auszuführen und damit nur eine sehr eingeschränkte Handhabung. Die Bewegung der gegriffenen Objekte erfolgt dann manuell z. B. durch eine Bewegung des Arms des Benutzers. Dies kann zu einer unerwünschten Belastung für den Benutzer führen. Auch ist das manuelle Bewegen der gegriffenen Objekte in vielen Anwendungen zeitaufwendig. Zudem ist das manuelle Bewegen der gegriffenen Objekte regelmäßig fehleranfällig und nicht hinreichend reproduzierbar. In den Schriften US 2006/181094 A, US 8 672 373 B1, US 7 344 171 B1 sowie US 4 095 832 A werden Grillzangen mit Rotationsfunktion gezeigt. Weiters ist aus der DE 1020 04 031682 eine Zeckenzange mit Greif- und Rotierfunktion, ausgelöst durch translatorische Betätigung, bekannt.

Hiervon ausgehend ist es Aufgabe der hier vorliegenden Erfindung, die im Zusammenhang mit dem Stand der Technik geschilderten technischen Probleme zu lösen bzw. zumindest zu lindern. Es soll insbesondere eine Vorrichtung zum Greifen eines Objekts (insbesondere von Grillgut) vorgestellt werden, die eine besonders flexible, zuverlässige und effiziente Handhabung des Objekts ermöglicht.

Diese Aufgaben werden gelöst mit einer Vorrichtung und einer Zangenanordnung gemäß den Merkmalen der unabhängigen Ansprüche. Weitere vorteilhafte Ausgestaltungen der Vorrichtung sind in den abhängigen Ansprüchen angegeben. Die in den Ansprüchen einzeln aufgeführten Merkmale sind in beliebiger, technologisch sinnvoller Weise miteinander kombinierbar und können durch erläuternde Sachverhalte aus der Beschreibung ergänzt werden, wobei weitere Ausführungsvarianten der Erfindung aufgezeigt werden.

Hierzu trägt eine Vorrichtung zum Greifen und Rotieren eines Objekts bei, die zumindest aufweist:
- zwei Zangenschenkel, die an einem Gelenkpunkt miteinander verbunden sind,
- ein Getriebe, das mit den zwei Zangenschenkeln verbunden ist, und
- ein Betätigungsglied, das mit dem Getriebe verbunden ist,
wobei eine erste translatorische Bewegung des Betätigungsglieds durch das Getriebe derart umgewandelt wird, dass die Zangenschenkel zueinander verschwenkbar und um eine den Gelenkpunkt umfassende Rotationsachse rotierbar sind.

Mit der Vorrichtung kann ein Objekt gegriffen und rotiert werden. Das kann beispielsweise beim Grillen zum Wenden des Grillguts verwendet werden. Dabei ist es insbesondere bei länglichem Grillgut wie beispielsweise bei Bratwürsten bevorzugt, dass das Grillgut um dessen Achse gewendet werden kann. Auch in weiteren Anwendungen kann es erforderlich sein, ein gegriffenes Objekt zu rotieren. Eine manuelle Rotation des gegriffenen Objektes konnte bislang beispielsweise durch eine Drehbewegung mit dem Handgelenk erfolgen. Insbesondere eine solche Drehbewegung mit dem Handgelenk kann bei häufiger Wiederholung zu Beschwerden führen. Als Beschwerden können beispielsweise Ermüdungserscheinungen und/oder eine Sehnenscheidenentzündung im Handgelenk auftreten. Weiterhin kann es für ältere Menschen oder für Menschen mit einer Behinderung schwierig sein, eine Drehbewegung mit dem Handgelenk durchzuführen. Mit der beschriebenen Vorrichtung kann in vielen Anwendungen auf eine solche Drehbewegung verzichtet werden. Da mit der Vorrichtung eine manuelle Rotation des gegriffenen Objekts nicht erforderlich ist, kann die (automatisch ausgeführte) Rotationsbewegung zudem besonders zuverlässig und reproduzierbar erreicht werden. So kann beispielsweise ein gegriffenes Objekt um einen durch die Konstruktion der Vorrichtung vorgegebenen Winkel rotiert werden, der bei jeder Wiederholung dieser Bewegung gleich groß ist. Auch kann ein Objekt durch die Vorrichtung besonders sicher während der Rotation gehalten werden. Auch kann mit der Vorrichtung eine besonders schnelle und präzise Handhabung von Objekten erfolgen.

Insbesondere zum Greifen eines Objekts weist die Vorrichtung zwei Zangenschenkel auf. Die Zangenschenkel sind bevorzugt stangenartig ausgeführt. Bevorzugt sind die Zangenschenkel nach Art einer Zange miteinander in dem Gelenkpunkt verbunden und gegeneinander verschwenkbar gelagert. Die Zangenschenkel weisen bevorzugt jeweils ein Greifende auf, an dem das Objekt gegriffen werden kann. An dem Greifende weisen die Zangenschenkel bevorzugt jeweils eine Greifbacke auf. Beide Greifenden können aufeinander zu bewegt werden, um zwischen ihnen das Objekt bzw. das Grillgut zu klemmen (Schließvorgang). Beide Greifenden können auch wieder voneinander weg bewegt werden, um ein zwischen ihnen befindliches Objekt bzw. Grillgut freizugeben (Öffnungsvorgang). Weiterhin weisen die Zangenschenkel bevorzugt jeweils ein Führungsende auf, an dem die Zangenschenkel in dem Getriebe geführt werden. Insbesondere sind stellen die Greifenden und die Führungsenden bezüglich des Gelenkpunktes gegenüberliegende Enden der Zangenschenkel dar. Die Zangenschenkel können durch die mittels des Gelenks aus sie einwirkende Bewegung zueinander verschwenkt und rotiert werden. Unter Verschwenken der Zangenschenkel ist insbesondere ein Schließen (zum Greifen eines Objekts) oder Öffnen (zum Freigeben des Objekts) Greifenden der Zangenschenkel zu verstehen. Die Rotation der Zangenschenkel erfolgt um die Rotationsachse. Die Rotationsachse verläuft jedenfalls durch den Gelenkpunkt. Bevorzugt ist, dass die Rotationsachse in einer Ebene angeodnet ist, die von den Zangenschenkel aufgespannt ist. Zusätzlich oder alternativ ist bevorzugt, dass die Rotationsachse mittig zwischen den Greifenden verläuft. Insbesondere ist es bevorzugt, dass die Rotationsachse in einer Ebene der Zangenschenkel liegt, durch den Gelenkpunkt verläuft und mittig zwischen den Greifenden der Zangenschenkel verläuft. Damit kann ein längliches Objekt wie beispielsweise eine Bratwurst um dessen Achse rotiert werden. Insbesondere in dem Fall eignet sich die Vorrichtung besonders zum Wenden von Grillgut, insbesondere zum Wenden von Bratwürsten.

Bevorzugt sind die Zangenschenkel im Wesentlichen gerade ausgeführt. Alternativ ist es aber auch bevorzugt, dass die Zangenschenkel (teilweise) gebogen ausgeführt sind und/oder einen (lokalen) Knick aufweisen. Bevorzugt ist der Knick in oder angrenzend dem Gelenkpunkt angeordnet. Damit kann insbesondere eine besonders kompakte Bauweise der Vorrichtung erreicht werden.

Die Zangenschenkel sind mit einem Getriebe verbunden. Unter dem Getriebe ist hier insbesondere eine Vorrichtung zu verstehen, die dazu bestimmt und eingerichtet ist, eine Bewegung des Betätigungsglieds in eine Bewegung der Zangenschenkel umzuwandeln. Ein Benutzer der Vorrichtung kann insbesondere das Betätigungsglied betätigen und damit die Zangenschenkel verschwenken und rotieren. Bei dem Betätigungsglied handelt es sich bevorzugt um eine Betätigungsstange. Unter Betätigen ist insbesondere zu verstehen, dass der Benutzer das Betätigungsglied translatorisch (beziehungsweise axial) bewegt. Dazu ist es nicht erforderlich, dass der Benutzer das Betätigungsglied unmittelbar bzw. direkt bewegt. Der Benutzer kann das Betätigungsglied auch (über andere Bauteile der Vorrichtung) mittelbar bzw. indirekt bewegen. Das Getriebe ist insbesondere ein (rein) mechanisches Getriebe. Ein mechanisches Getriebe wandelt die von einem Aktuator (hier des Betätigungsgliedes) initiierte Bewegung in eine abweichende Bewegung eines Effektors (hier der Zangenschenkel) um, wobei keine elektrischen und oder elektronischen Bauteile bei der Bewegungsumwandlung unmittelbar mitwirken. Die Bewegung von Aktuator und Effektor unterscheiden sich hinsichtlich mindestens einer der Eigenschaften Orientierung und Geschwindigkeit. Das Getriebe kann beide Bewegungen von Aktuator und Effektor (teilweise) ausführen. Bei einem mechanischen Getriebe sind beispielsweise Zahnräder, Zahnstangen Gelenke, Führungskulissen und der gleichen vorgesehen, welche die Bewegungsumwandung (allein) bewirken. Bevorzugt ist das Betätigungsglied starr mit dem Getriebe verbunden, während die Führungsenden der Zangenschenkel gegenüber bzw. in dem Getriebe beweglich und/oder verfahrbar sind. Das Getriebe ist insbesondere so gestaltet und eingerichtet, dass eine über das Betätigungsglied eingeleitete translatorische Bewegung in eine Schwenkbewegung und/oder Rotationsbewegung der Zangenschenkel überführt wird.

Das Betätigungsglied kann mit einer ersten translatorischen Bewegung und mit einer zweiten translatorischen Bewegung bewegt werden. Unter der ersten translatorischen Bewegung ist hier jede translatorische Bewegung in eine erste Bewegungsrichtung zu verstehen. Unter der zweiten translatorischen Bewegung ist hier jede translatorische Bewegung in eine zweite Bewegungsrichtung zu verstehen, wobei die zweite Bewegungsrichtung der ersten Bewegungsrichtung entgegengerichtet ist. Insbesondere kann das Betätigungsglied (nur) eine erste translatorische Bewegung hin zum bzw. in das Getriebe hinein und eine zweite translatorische Bewegung weg vom bzw. aus dem Getriebe heraus ausführen. Die translatorische (bzw. axiale) Bewegung kann parallel oder deckungsgleich relativ zur Rotationsachse verlaufen.

Bevorzugt sind die Zangenschenkel zumindest teilweise austauschbar. Beispielsweise kann dazu an den Zangenschenkeln jeweils eine Steckverbindung vorgesehen sein, an die verschiedene Aufsätze für verschiedene Anwendungen aufgesetzt werden können. Auch können die Aufsätze so abgenommen und unabhängig von der übrigen Vorrichtung gereinigt werden. Die Aufsätze können die Greifenden umfassen oder dort angeordnet sein. Die Zangenschenkel können (zeitweise) mit einem Verschlusselement zueinander lagefest positioniert sein, z. B. in einer geschlossenen Stellung. Das Verschlusselement kann beispielsweise gegenüberliegende Abschnitte der Zangenschenkel zwischen Gelenk und Greifenden zumindest teilweise umgreifen und einen (mechanischen) Verschluss aufweisen, der vom Benutzer bedarfsgerecht aktiviert oder deaktiviert werden kann. Die Zangenschenkel können mit einem metallischen (Grund-)Material gebildet sein. Es ist möglich, dass die Zangenschenkel (zumindest teilweise) mit einem anderen Metall und/oder einem Nicht-Metall ausgeführt sind, z. B. in einem Abschnitt, der entfernt von den Greifbacken positioniert ist (insbesondere nach Art einer Oberflächenbeschichtung).

Bei der Vorrichtung können die Zangenschenkel durch eine, der ersten translatorischen Bewegung entgegengesetzte, zweite translatorische Bewegung des Betätigungsglieds ohne Rotation zueinander verschwenkbar sein.

Bevorzugt sind die Zangenschenkel durch die erste translatorische Bewegung schließbar und rotierbar und durch die zweite translatorische Bewegung (ohne Rotation) öffnenbar. Das Schließen der Zangenschenkel und das Rotieren der Zangenschenkel durch die erste translatorische Bewegung kann dabei zeitgleich oder (zumindest teilweise voneinander getrennt) nacheinander erfolgen. Während der ersten translatorischen Bewegung kann das Objekt gegriffen und rotiert werden. Durch das Öffnen der Zangenschenkel kann das Objekt wieder freigegeben werden. Damit das Objekt dabei in der rotierten Position verbleibt, erfolgt beim Freigeben bevorzugt keine (weitere) Rotation. Das Freigeben des Objekts kann folglich (allein) während der zweiten translatorischen Bewegung des Betätigungsglieds erfolgen.

Das Betätigungsglied kann zwischen einer ersten Endstellung und einer zweiten Endstellung translatorisch verstellbar sein. Die Zangenschenkel können hierbei geöffnet sein, wenn sich das Betätigungsglied in der ersten Endstellung befindet. Weiter können die Zangenschenkel durch die erste translatorische Bewegung des Betätigungsglieds von der ersten Endstellung in eine Zwischenstellung schließbar sein. Wird die erste translatorische Bewegung des Betätigungsglieds von der Zwischenstellung in die zweite Endstellung fortgesetzt, können die Zangenschenkel um die Rotationsache rotierbar sein.

Befindet sich das Betätigungsglied in der ersten Endstellung sind die Zangenschenkel bevorzugt maximal geöffnet. Das bedeutet insbesondere, dass die Greifenden der Zangenschenkel in der ersten Endstellung weiter voneinander entfernt sind als in jeder anderen möglichen Stellung des Betätigungsglieds. Durch die erste translatorische Bewegung kann das Betätigungsglied von der ersten Endstellung in die zweite Endstellung bewegt werden. Durch die zweite translatorische Bewegung kann das Betätigungsglied von der zweiten Endstellung in die erste Endstellung (zurück) bewegt werden. Wird das Betätigungsglied durch die erste translatorische Bewegung von der ersten Endstellung in die zweite Endstellung bewegt, werden die Zangenschenkel geschlossen und (anschließend um einen vorgegebenen Rotationswinkel) rotiert. Das Schließen der Zangenschenkel erfolgt bevorzugt vor dem Rotieren der Zangenschenkel. Das Schließen der Zangenschenkel kann durch die erste translatorische Bewegung des Betätigungsglieds von der ersten Endstellung in die Zwischenstellung erreicht werden. Die Zwischenstellung ist zwischen der ersten Endstellung und der zweiten Endstellung vorgesehen. Bevorzugt liegt der Abstand zwischen der ersten Endstellung und der Zwischenstellung im Bereich von 40 % bis 70% des Abstandes zwischen der ersten Endstellung und der zweiten Endstellung. Der Abstand kann beispielsweise relativ zur translatorischen Bewegung des Betätigungsglieds und/oder einem Verfahrweg der Führungsenden der Zangenschenkel an bzw. in dem Getriebe bestimmt werden.

Wird das Betätigungsglied aus der Zwischenstellung weiter entlang der ersten translatorischen Bewegung (also weiterhin in eine erste Bewegungsrichtung) hin zur zweiten Endstellung bewegt, können die Zangenschenkel rotiert werden. Während der Rotation erfolgt bevorzugt keine (weitere) Verschwenkung der Zangenschenkel zueinander. Es ist bevorzugt, dass die Zangenschenkel durch die zweite translatorische Bewegung des Betätigungsglieds von der zweiten Endstellung in die erste Endstellung öffnenbar sind. Es ist möglich, dass der Schließvorgang während der zweiten translatorische Bewegung des Betätigungsglieds von der zweiten Endstellung bis in die erste Endstellung andauert, es ist aber alternativ auch möglich, dass der Schließvorgang in einem kürzeren Intervall abgeschlossen ist. Dabei erfolgt bevorzugt keine Rotation der Zangenschenkel um die Rotationsachse.

In der ersten Endstellung und/oder der zweiten Endstellung können die Zangenschenkel einen vorgebbaren Öffnungswinkel bilden bzw. zwischen sich aufspannen. Der Öffnungswinkel kann (z. B. wiederholbar) einstellbar sein. In der ersten (offenen) Endstellung kann der Öffnungswinkel beispielsweise im Bereich von 25° bis 60° [Grad] betragen. In der zweiten (geschlossenen) Endstellung ist der Öffnungswinkel kleiner, vorzugsweise maximal 10° oder maximal 5°; ganz besonders bevorzugt jedoch größer 0° oder mindestens 1°. Der Öffnungswinkel kann durch eine (mechanische) Verstellung der Anordnung der Funktionskomponenten erreicht werden, beispielsweise die räumliche Festlegung der Positionen Betätigungsglied, Führungsdorn, Getriebekörper und/oder Getriebegehäuse zueinander. Hierfür können Verstellelemente vorgesehen sein, die z. B. über einen Formschluss die axiale/translatorische Positionierung der vorgenannten Teile zueinander einstellen bzw. arretieren können. Mit der Anpassung des Öffnungswinkels kann einfach und zweckmäßig eine Anpassung des Bewegungsablaufs an das zu behandelnde Grillgut vorgenommen werden.

Die Zangenschenkel können um einen Rotationswinkel im Bereich von 90° bis 270° [Grad] rotierbar sein. Der Rotationswinkel ist der Winkel, um den die Zangenschenkel (und damit auch ein gegriffenes Objekt) um die Rotationsachse rotiert werden, wenn das Betätigungsglied von der ersten Endstellung in die zweite Endstellung bewegt wird. Bevorzugt ergibt sich der Rotationswinkel durch die Konstruktion des Getriebes der Vorrichtung. Bevorzugt ist genau ein einzelner Rotationswinkel aus dem angegebenen Bereich voreingestellt. Gegebenenfalls kann das Getriebe so eingerichtet sein, dass der Benutzer den einzelnen Rotationswinkel einstellen oder aus einer Mehrzahl von (vordefinierten) Rotationswinkeln bedarfsgerecht auswählen kann. Der Rotationswinkel liegt bevorzugt in einem Bereich von 150° bis 210° [Grad]. Besonders bevorzugt beträgt der Rotationswinkel 180° [Grad]. Insbesondere beim Wenden von Grillgut auf einem Grill ist eine Rotation um 180° bevorzugt. Bevorzugt ist nicht vorgesehen, dass die Zangenschenkel um einen anderen als den (einen vorgegebenen) Rotationswinkel rotiert werden können. Damit kann eine besonders hohe Reproduzierbarkeit der Rotation erreicht werden.

Die Vorrichtung kann zwei Zangengriffe aufweisen, die derart miteinander und mit dem Betätigungsglied verbunden sind, dass das Betätigungsglied durch ein Verschwenken der Zangengriffe zueinander translatorisch bewegbar ist. Die Zangengriffe können beispielsweise über ein Gestänge mit dem Betätigungsglied verbunden sein. Beim Verschwenken der Zangengriffe erfolgt insbesondere ein Öffnen und/oder Schließen der Zangengriffe. Die Zangengriffe sind bevorzugt stangenförmig ausgeführt. Weiterhin ist es bevorzugt, dass die Zangengriffe nach Art einer Zange miteinander (insbesondere in einem zweiten Gelenkpunkt) miteinander verbunden sind. Bevorzugt bewirkt ein Schließen der Zangengriffe die erste translatorische Bewegung des Betätigungsglieds und ein Öffnen der Zangengriffe die zweite translatorische Bewegung des Betätigungsglieds. Ein Benutzer der Vorrichtung betätigt bevorzugt (ausschließlich) die Zangengriffe. Das Betätigungsglied befindet sich bevorzugt in der ersten Endstellung, wenn die Zangengriffe maximal geöffnet sind. Das Betätigungsglied befindet sich bevorzugt in der zweiten Endstellung, wenn die Zangengriffe maximal geschlossen sind. Durch das Schließen der Zangengriffe kann ein Objekt gegriffen und rotiert werden. Durch das Öffnen der Zangengriffe kann das Objekt bevorzugt (ohne Rotation) freigegeben werden.

Der Schließvorgang kann gegen einen (mechanischen) Widerstand und der Öffnungsvorgang kraftunterstützt erfolgen. Bevorzugt sind die Zangengriffe derart miteinander und mit dem Betätigungsglied verbunden, dass auf die Zangengriffe eine Rückstellkraft in Richtung einer geöffneten Stellung der Zangengriffe wirkt. In dem Fall kann der Benutzer die Zangengriffe entgegen der Rückstellkraft schließen. Das Öffnen der Zangenschenkel erfolgt durch die Rückstellkraft, sobald der Benutzer dieser nicht mehr entgegenwirkt. Durch eine derartige Ausführung muss der Benutzer zwischen dem Schließen und Öffnen der Zangengriffe nicht umgreifen. Die Rückstellkraft kann beispielswiese durch eine Feder und/oder durch eine pneumatische Vorrichtung bewirkt werden, die zwischen den Zangengriffen, in dem Gestänge, in dem Getriebe und/oder zwischen den Zangenschenkeln angeordnet ist.

Das Getriebe kann zumindest einen Getriebekörper aufweisen, der mit dem Betätigungsglied verbunden ist und der zumindest eine rampenartige Führung aufweist, in die Führungsenden der Zangenschenkel derart eingreifen, dass die Zangenschenkel durch eine translatorische Bewegung des Betätigungsglieds zueinander verschwenkbar sind. Der Getriebekörper ist bevorzugt fest bzw. starr mit dem Betätigungsglied verbunden, so dass eine translatorische Bewegung des Betätigungsglieds eine translatorische Bewegung des Getriebekörpers bewirkt. Der Getriebekörper ist bevorzugt in einem Getriebegehäuse gehalten und geführt. Die Zangenschenkel weisen bevorzugt Rollen an den Führungsenden auf, mit denen die Zangenschenkel in die rampenartige Führung eingreifen. Wird das Betätigungsglied zwischen der ersten Endstellung in der zweiten Endstellung bewegt, können die Führungsenden der Zangenschenkel (insbesondere durch die Rollen) entlang der rampenartigen Führung bewegt werden, wodurch die Zangenschenkel zueinander verschwenkt werden können. Bevorzugt ist die rampenartige Führung derart ausgeführt, die Zangenschenkel durch eine Bewegung des Betätigungsglieds von der ersten Endstellung in die Zwischenstellung geschlossen werden, und dass die Zangenschenkel durch eine Bewegung des Betätigungsglieds von der zweiten Endstellung in die erste Endstellung geöffnet werden. Die rampenartige Führung ist bevorzugt nach Art einer Kulissenführung ausgeführt. Der Getriebekörper ist jedenfalls im Bereich der rampenartigen Führung bevorzugt quaderförmig ausgeführt. Das Getriebegehäuse ist bevorzugt zylinderförmig ausgeführt wobei eine Zylinderachse des Getriebegehäuses bevorzugt mit der Rotationsachse zusammenfällt. Damit kann der Getriebekörper in dem Getriebegehäuse rotiert werden. Mit einer solchen Kulissenführung kann der komplexe Bewegungsablauf mit einer geringen Teileanzahl realisiert werden.

Das Getriebe kann zumindest einen Getriebekörper aufweisen, der mit dem Betätigungsglied verbunden ist und der zumindest eine Zahnreihe bzw. einen Zahnstangenabschnitt aufweist, in die Führungsenden der Zangenschenkel derart eingreifen, dass die Zangenschenkel durch eine translatorische Bewegung des Betätigungsglieds zueinander verschwenkbar sind. Die gelagerten Führungsenden können hierfür eine Zahnreihe bzw. einen Zahnkranzabschnitt aufweisen.

Diese Zahnelement-Variante erlaubt eine relativ genaue Führung ohne unerwünscht viel Spiel bzw. großen Toleranzen.

Der Getriebekörper kann mindestens eine Rotationsführung zur Rotation der Zangenschenkel um die Rotationsachse aufweisen. Durch die Rotationsführung kann der Getriebekörper bevorzugt zusammen mit den Zangenschenkeln um die Rotationsachse rotiert werden. Die Zangenschenkel sind bevorzugt drehfest mit dem Getriebekörper verbunden. Das Betätigungsglied ist bevorzugt drehbar an dem Getriebekörper gehalten. Damit kann erreicht werden, dass die Zangenschenkel rotiert werden, während die Zangengriffe nicht rotiert werden. Der Getriebekörper kann zumindest im Bereich der Rotationsführung zylinderförmig ausgeführt sein, wobei eine Zylinderachse des Getriebekörpers bevorzugt mit der Rotationsachse zusammenfällt. Die Rotationsführung ist bevorzugt nach Art einer Kulissenführung ausgeführt. Für die Rotationsführung ist bevorzugt mindestens ein Führungsdorn in dem Getriebegehäuse vorgesehen, der in eine Nut in dem Getriebekörper eingreift. Die Nut umläuft den (zylinderförmigen) Getriebekörper bevorzugt vollständig, sodass der Führungsdorn nach einer Rotation um 360° [Grad] wieder an der Stelle ist, an der sich der Führungsdorn auch bei 0° befand. Eine Rotation des Getriebekörpers ist so auch über 360° [Grad] hinaus und damit unbegrenzt möglich. Bei einer translatorischen Bewegung wird der Getriebekörper bevorzugt durch den mindestens einen Führungsdorn geführt. Bevorzugt ist die Nut in dem Getriebekörper derart ausgeführt, dass eine translatorische Bewegung des Betätigungsglieds von der ersten Endstellung in die Zwischenstellung keine Rotation bewirkt. Das kann dadurch erreicht werden, dass die Nut in dem entsprechenden Abschnitt parallel zu der Rotationsachse ausgeführt ist. Weiterhin ist es bevorzugt, dass die Nut in dem Getriebekörper derart ausgeführt ist, dass eine translatorische Bewegung des Betätigungsglieds von der Zwischenstellung in die zweite Endstellung eine Rotation des Getriebekörpers bewirkt. Das kann dadurch erreicht werden, dass die Nut in dem entsprechenden Abschnitt jedenfalls auch in Umfangsrichtung des (zylinderförmigen) Getriebekörpers verläuft. Weiterhin ist es bevorzugt, dass die Nut in dem Getriebekörper derart ausgeführt ist, dass eine translatorische Bewegung des Betätigungsglieds von der zweiten Endstellung in die erste Endstellung keine Rotation bewirkt. Das kann dadurch erreicht werden, dass die Nut in dem entsprechenden Abschnitt parallel zu der Rotationsachse ausgeführt ist.

Durch die Rotationsführung wird also bevorzugt die zweite translatorische Bewegung des Betätigungsglieds nicht als Umkehrung der ersten translatorischen Bewegung umgewandelt. Das kann dadurch erreicht werden, dass die Nut unterschiedlich gestaltete Zweige und/oder unterschiedliche Tiefen aufweist.

Die Nut weist bevorzugt einen ersten Zweig und einen zweiten Zweig auf. In dem ersten Zweig der Nut wird der Führungsdorn bevorzugt von der ersten Endstellung in die zweite Endstellung geführt, wobei eine Rotation der Zangenschenkel erfolgt (jedenfalls zwischen der Zwischenstellung und der zweiten Endstellung). Anschließend wechselt der Führungsdorn in den zweiten Zweig der Nut. In dem zweiten Zweig der Nut wird der Führungsdorn bevorzugt von der zweiten Endstellung in die erste Endstellung (zurück)geführt, ohne dass eine Rotation der Zangenschenkel erfolgt. Anschließend wechselt der Führungsdorn bevorzugt wieder in den ersten Zweig. An den Endstellungen wechselt der Führungsdorn also bevorzugt zwischen den Zweigen, sodass die Führung bei der Bewegung von der ersten Endstellung zur zweiten Endstellung in einer anderen Weise erfolgen kann als die Führung von der zweiten Endstellung (zurück) in die erste Endstellung. Das kann durch unterschiedliche Tiefen der Nut erreicht werden. In der ersten Endstellung weist der erste Zweig der Nut bevorzugt eine erste Tiefe auf und der zweite Zweig eine zweite Tiefe, die kleiner ist als die erste Tiefe. Erreicht der Führungsdorn also die erste Endstellung über den zweiten Zweig, kann der Führungsdorn an der ersten Endstellung (irreversibel) in den tieferen zweiten Zweig der Nut wechseln. In der zweiten Endstellung weist der erste Zweig der Nut bevorzugt eine dritte Tiefe auf und der zweite Zweig eine vierte Tiefe, die größer ist als die dritte Tiefe. Erreicht der Führungsdorn also die zweite Endstellung über den ersten Zweig, kann der Führungsdorn an der zweiten Endstellung (irreversibel) in den tieferen zweiten Zweig der Nut wechseln. Um die unterschiedlichen Tiefen an den Endstellungen auszugleichen, verändert sich die Tiefe der Zweige der Nuten bevorzugt (insbesondere kontinuierlich) zwischen der ersten Endstellung und der zweiten Endstellung.

Damit der Führungsdorn an den Endstellungen besonders gut in den jeweils tieferen Zweig der Nut wechseln kann, ist der Führungsdorn bevorzugt federnd gehalten. Das kann beispielswiese derart erreicht werden, dass der Führungsdorn in eine Ausnehmung (wie beispielsweise eine Bohrung) des Getriebegehäuses eingesetzt und darin beweglich gehalten ist. Der Führungsdorn kann dabei durch eine das Getriebegehäuse umspannende Spannfeder oder durch ein Gummiband gehalten werden.

Bevorzugt liegt die erste Tiefe zwischen 3,5 mm und 4,5 mm [Millimeter] und beträgt insbesondere ca. 4 mm. Die vierte Tiefe entspricht bevorzugt der ersten Tiefe. Bevorzugt liegt die zweite Tiefe zwischen 1,5 mm und 2,5 mm [Millimeter] und beträgt insbesondere ca. 2 mm. Die dritte Tiefe entspricht bevorzugt im Wesentlichen der zweiten Tiefe.

Bevorzugt ist die Nut derart in den ersten Zweig und den zweiten Zweig unterteilt, dass der erste Zweig und der zweite Zweig den (vorzugsweise zylinderförmigen) Getriebekörper in ihrer Gesamtheit vollumfänglich umspannen. Alternativ ist es bevorzugt, dass die Nut von zwei oder mehr Paaren von erstem und zweitem Zweig gebildet wird. Ein Führungsdorn kann dann die zwei oder mehr Paare nacheinander durchlaufen. Sind beispielsweise zwei Paare vorgesehen, kann ein Führungsdorn einen ersten Zweig eines ersten Paares, anschließend einen zweiten Zweig des ersten Paares, anschließend einen ersten Zweig eines zweiten Paares, anschließend einen zweiten Zweig des zweiten Paares und anschließend wieder den ersten Zweig des ersten Paares durchlaufen. Bevorzugt ist pro Paar von erstem Zweig und zweitem Zweig jeweils ein Führungsdorn vorgesehen. Sind zwei Paare von erstem Zweig und zweitem Zweig vorgesehen, sind die Führungsdorne bevorzugt an gegenüberliegenden Seiten des Getriebegehäuses angeordnet.

Der Getriebekörper kann mit einem Getriebegehäuse eine Kulissenführung zur Rotation der Zangenschenkel um die Rotationsache bilden, wobei der Getriebekörper mit den Führungsenden der Zangenschenkel eine Kulissenführung zum Verschwenken der Zangenschenkel zueinander bildet. Die Kulissenführung zur Rotation der Zangenschenkel wird bevorzugt durch den Getriebekörper mit der Rotationsführung und dem darin eingreifenden mindestens einen Führungsdorn gebildet. Die Kulissenführung zum Verschwenken der Zangenschenkel wird bevorzugt durch die rampenartige Führung und die darin eingreifenden Führungsenden der Zangenschenkel gebildet.

Als ein bevorzugter Anwendungsfall wird eine Zangenanordnung vorgeschlagen, die eine Betätigungsanordnung und einen Greifer umfasst, wobei die Betätigungsanordnung derart mit dem Greifer verbunden ist, dass der Greifer durch Aktivieren der Betätigungsanordnung eine Greifbewegung und eine Rotationsbewegung durchführt und dass der Greifer durch Deaktivieren der Betätigungsvorrichtung eine der Greifbewegung entgegengesetzte Bewegung ohne Rotation durchführt.

Die für die Vorrichtung zum Greifen und Rotieren eines Objekts dargestellten besonderen Vorteile und Ausgestaltungsmerkmale sind in beliebiger, technologisch sinnvoller Weise auf die Zangenanordnung anwendbar und übertragbar, und umgekehrt.

Die Zangenanordnung ist bevorzugt zum Greifen und Rotieren eines Objekts bestimmt und eingerichtet. Das Objekt kann bevorzugt mit dem Greifer gegriffen werden. Dazu ist der Greifer bevorzugt nach Art einer Zange ausgebildet. Der Greifer kann von einem Benutzer über die Betätigungsanordnung betätigt werden. Bei üblicher Verwendung der Zangenanordnung betätigt der Benutzer also bevorzugt den Greifer nicht unmittelbar, sondern nur mittelbar über die Betätigungsvorrichtung. Unter Betätigen der Betätigungsanordnung ist hier jede Handlung eines Benutzers der Zangenanordnung zu verstehen, die dazu bestimmt ist, den Greifer (über die Betätigungsanordnung vermittelt) zu öffnen, zu schließen beziehungsweise zu rotieren. Das Betätigen der Betätigungsanordnung umfasst insbesondere das Aktivieren und das Deaktivieren der Betätigungsanordnung. Das Aktivieren und das Deaktivieren der Betätigungsanordnung sind bevorzugt einander entgegengerichtete bzw. komplementäre Handhabungen. Durch das Aktivieren der Betätigungsanordnung kann der Benutzer ein Objekt greifen und rotieren. Die Rotation erfolgt dabei bevorzugt erst, nachdem das Objekt gegriffen worden ist. Durch das Deaktivieren der Betätigungsvorrichtung kann der Benutzer das Objekt freigeben, ohne dieses dabei zu rotieren.

Die Zangenanordnung kann eine Vorrichtung zum Greifen und Rotieren eines Objekts der hier ebenfalls vorgeschlagenen Bauart umfassen. Die Betätigungsvorrichtung umfasst bevorzugt das Betätigungsglied. Weiterhin umfasst die Betätigungsvorrichtung bevorzugt die Zangengriffe und bevorzugt zudem das Gestänge, über das die Zangengriffe mit dem Betätigungsglied verbunden sind. Der Greifer umfasst bevorzugt die zwei Zangenschenkel. Weiterhin umfasst der Greifer bevorzugt die Greifbacken. Insbesondere durch das Getriebe kann die für die Zangenanordnung beschriebene Funktionalität erreicht werden.

Zudem wird die Verwendung der beschriebenen Zangenanordnung (insbesondere umfassend die beschriebene Vorrichtung zum Greifen und Rotieren eines Objekts) zum Greifen und Rotieren eines Lebensmittels beschrieben. Die Zangenanordnung wird bevorzugt zum Greifen, Rotieren und Loslassen von heißen Lebensmitteln, wie insbesondere Grillgut, verwendet. Die für die beschriebene Vorrichtung zum Greifen und Rotieren eines Objekts dargestellten besonderen Vorteile und Ausgestaltungsmerkmale sind in beliebiger, technologisch sinnvoller Weise auf die Verwendung der Zangenanordnung anwendbar und übertragbar.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. In den Figuren dargestellte und/oder erläuterte technische Merkmale können extrahiert und ggf. mit Erläuterungen aus anderen Figuren und/oder der vorstehenden Beschreibung frei kombiniert werden, soweit dies nicht für einen technischen Widerspruch führt oder hier explizit ausgeschlossen wurde. Es zeigen:
- Fig. 1 bis 3:: Querschnittsdarstellungen einer Zangenanordnung mit einer Vorrichtung zum Greifen und Rotieren eines Objekts in drei verschiedenen Stellungen, und
- Fig. 4:: eine Darstellung einer Tiefe einer Nut einer Rotationsführung der Vorrichtung zum Greifen und Rotieren eines Objekts aus Fig. 1.

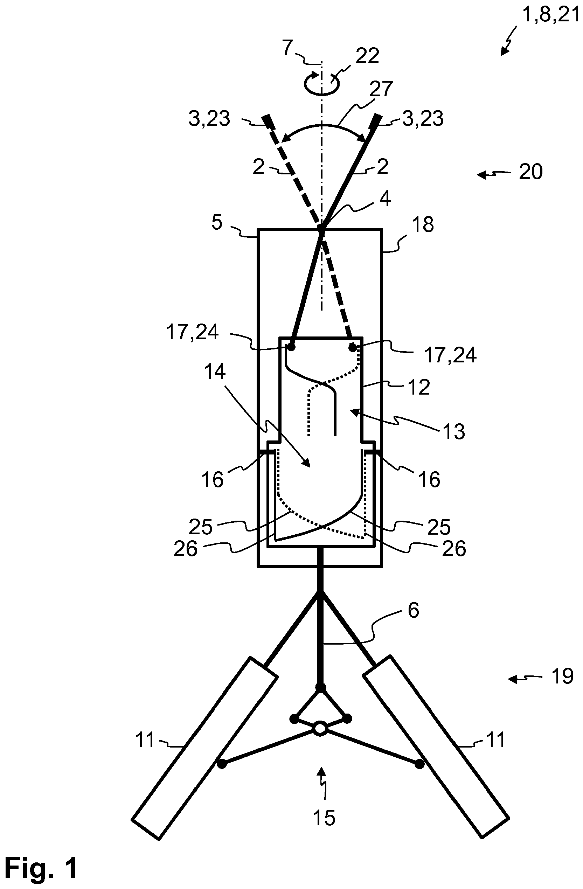

Die Fig. 1 bis 3 zeigen eine Zangenanordnung 21 mit einer Vorrichtung 1 zum Greifen und Rotieren eines Objekts, insbesondere nach Art einer so genannten Grillzange, in drei verschiedenen Stellungen. Die Vorrichtung 1 weist zwei Zangenschenkel 2 auf, die an einem Gelenkpunkt 4 miteinander verbunden sind. Der Übersichtlichkeit wegen ist der eine Zangenschenkel 2 als eine durchgezogene Linie und der andere Zangenschenkel 2 als eine gestrichelte Linie dargestellt. Die Zangenschenkel 2 weisen in dem Gelenkpunkt 4 einen Knick auf. Die Zangenschenkel weisen an Greifenden 3 jeweils eine Greifbacke 23 auf. Das zu greifende Objekt kann mit den Greifbacken 23 gegriffen werden. Die Zangenschenkel 2 und die Greifbacken 23 bilden einen Greifer 20 der Zangenanordnung 21.

Die Zangenschenkel 2 sind mit einem Getriebe 5 verbunden. Weiterhin ist ein Betätigungsglied 6 mit dem Getriebe 5 verbunden. Eine erste translatorische Bewegung des Betätigungsglieds 6 wird durch das Getriebe 5 derart umgewandelt, dass die Zangenschenkel 2 zueinander verschwenkbar und um eine den Gelenkpunkt 4 umfassende Rotationsachse 7 rotierbar sind. Die Rotation um die Rotationsachse 7 erfolgt mit einem Rotationswinkel 22 von ca. 180° [Grad]. Die Zangenschenkel 2 sind weiterhin durch eine der ersten translatorischen Bewegung entgegengesetzte zweite translatorische Bewegung des Betätigungsglieds 6 ohne Rotation zueinander verschwenkbar. In der gezeigten Darstellung ist die erste translatorische Bewegung von unten nach oben gerichtet und die zweite translatorische Bewegung von oben nach unten gerichtet.

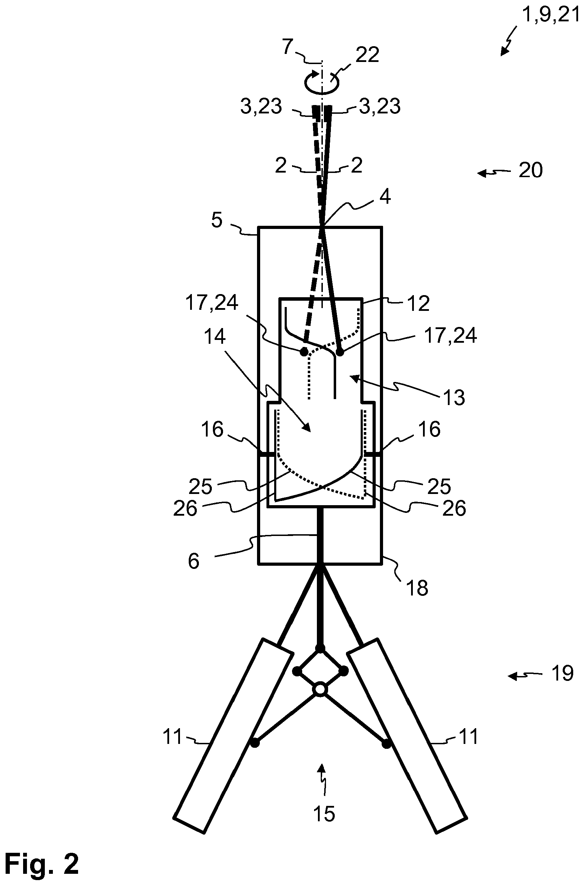

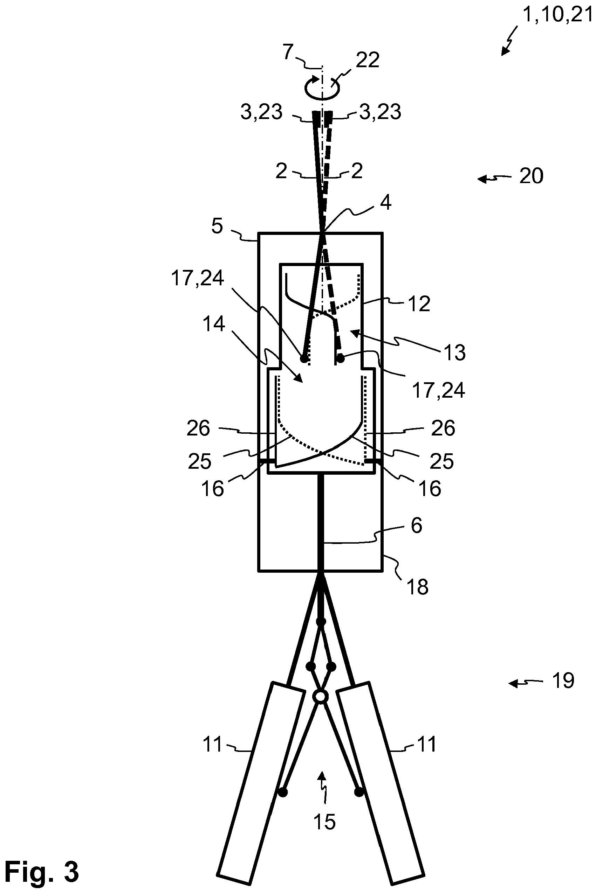

Das Betätigungsglied 6 ist zwischen einer ersten Endstellung 8 (die in Fig. 1 gezeigt ist) und einer zweiten Endstellung 10 (die in Fig. 3 gezeigt ist) translatorisch verstellbar. Die Zangenschenkel 2 sind geöffnet (Öffnungswinkel 27), wenn sich das Betätigungsglied 6 in der ersten Endstellung 8 befindet. Die Zangenschenkel 2 sind durch die erste translatorische Bewegung des Betätigungsglieds 6 von der ersten Endstellung 8 in eine Zwischenstellung 9 (die in Fig. 2 gezeigt ist) schließbar. Weiterhin sind die Zangenschenkel 2 durch die erste translatorische Bewegung des Betätigungsglieds 6 von der Zwischenstellung 9 in die zweite Endstellung 10 um die Rotationsache 7 rotierbar. Die Rotationsachse 7 liegt in einer Ebene der Zangenschenkel 2 (die hier der Papierebene entspricht), verläuft durch den Gelenkpunkt 4 und verläuft mittig zwischen den Greifenden 3 der Zangenschenkel 2. Die Zangenschenkel 2 sind durch die zweite translatorische Bewegung des Betätigungsglieds 6 von der zweiten Endstellung 10 in die erste Endstellung 8 öffnenbar.

Die Vorrichtung 1 weist weiterhin zwei Zangengriffe 11 auf, die derart über ein Gestänge 15 miteinander und mit dem Betätigungsglied 6 verbunden sind, dass das Betätigungsglied 6 durch Verschwenken der Zangengriffe 11 zueinander translatorisch bewegbar ist. Die Zangengriffe 11 und das Gestänge 15 bilden eine Betätigungsanordnung 19 der Zangenanordnung 21.

Das Getriebe 5 umfasst einen Getriebekörper 12, der in einem Getriebegehäuse 18 gehalten ist. Der Getriebekörper 12 ist mit dem Betätigungsglied 6 verbunden und weist eine rampenartige Führung 13 auf, in die Führungsenden 17 der Zangenschenkel 2 derart eingreifen, dass die Zangenschenkel 2 durch eine translatorische Bewegung des Betätigungsglieds 6 zueinander verschwenkbar sind. An den Führungsenden 17 weisen die Zangenschenkel 2 dazu Rollen 24 auf. Der Übersichtlichkeit halber ist der Teil der rampenartigen Führung 13 durch eine gestrichelte Linie eingezeichnet, in den der durch eine gestrichelte Linie dargestellte Zangenschenkel 2 eingreift. Der Getriebekörper 12 weist weiterhin eine Rotationsführung 14 zur Rotation der Zangenschenkel 2 um die Rotationsachse 7 auf. Die Rotationsführung 14 weist eine Nut auf, in die zwei Führungsdorne 16 eingreifen. Die Nut weist zwei erste Zweige 25 und zwei zweite Zweige 26 auf. Der Übersichtlichkeit halber ist ein zusammenhängendes Paar von erstem Zweig 25 und zweitem Zweig 26 als eine gestrichelte Linie eingezeichnet und das andere Paar als eine durchgezogene Line. Die Führungsdornen 16 können die beiden Paare nacheinander durchlaufen.

In der ersten Endstellung 8 (Fig. 1) sind die Zangengriffe 11 geöffnet und das Betätigungsglied 6 ist derart angeordnet, dass der Getriebekörper 12 in einer (in dieser Darstellung) untersten Position innerhalb des Getriebegehäuses 18 angeordnet ist. Die Zangenschenkel 2 sind (maximal) geöffnet. Werden die Zangengriffe 11 nun geschlossen, bewegt sich das Betätigungsglied 6 durch das Gestänge 15 (in dieser Darstellung) nach oben. Die Rollen 24 der Zangenschenkel 2 greifen dabei derart in die rampenartige Führung 13 ein, dass die Zangenschenkel 2 bei Erreichen der Zwischenstellung 9 (Fig. 2) geschlossen sind. Die Führungsdorne 16 greifen derart in die Nut der Rotationsführung 14 ein, dass dabei keine Rotation erfolgt. Das liegt daran, dass die Nut der Rotationsführung 14 zwischen der ersten Endstellung 8 und der Zwischenstellung 9 gerade ausgeführt ist (und parallel zur Rotationsachse 7 verläuft). Werden die Zangengriffe 11 über die Zwischenstellung 9 hinaus weiter geschlossen, werden die Zangenschenkel 2 nicht weiter zueinander verschwenkt. Das liegt daran, dass die rampenartige Führung 13 in dem Bereich zwischen der Zwischenstellung 9 und der zweiten Endstellung 10 derart gerade ausgeführt ist, dass eine translatorische Bewegung des Getriebekörpers 12 keine Verschwenkung der Zangenschenkel 2 zueinander bewirkt. Die Rotationsführung 14 bewirkt allerdings eine Rotation des Getriebekörpers 12 und der Zangenschenkel 2 um die Rotationsachse 7. Das liegt daran, dass die Nut der Rotationsführung 14 zwischen der Zwischenstellung 9 und der zweiten Endstellung 10 teilweise um den Umfang des Getriebekörpers 12 umlaufend ausgeführt ist. Bei Erreichen der zweiten Endstellung 10 (Fig. 3) sind die Zangenschenkel 2 gegenüber der ersten Endstellung 8 um einen Rotationswinkel 22 von 180° [Grad] rotiert.

Werden die Zangengriffe 11 anschließend geöffnet, bewegt sich das Betätigungsglied 6 von der zweiten Endstellung 10 in die erste Endstellung 8. Dabei werden die Zangenschenkel 2 geöffnet, ohne dass eine Rotation erfolgt. Das kann dadurch erreicht werden, dass die Nut der Rotationsführung 14 Zweige 25, 26 unterschiedlicher Tiefe aufweist.

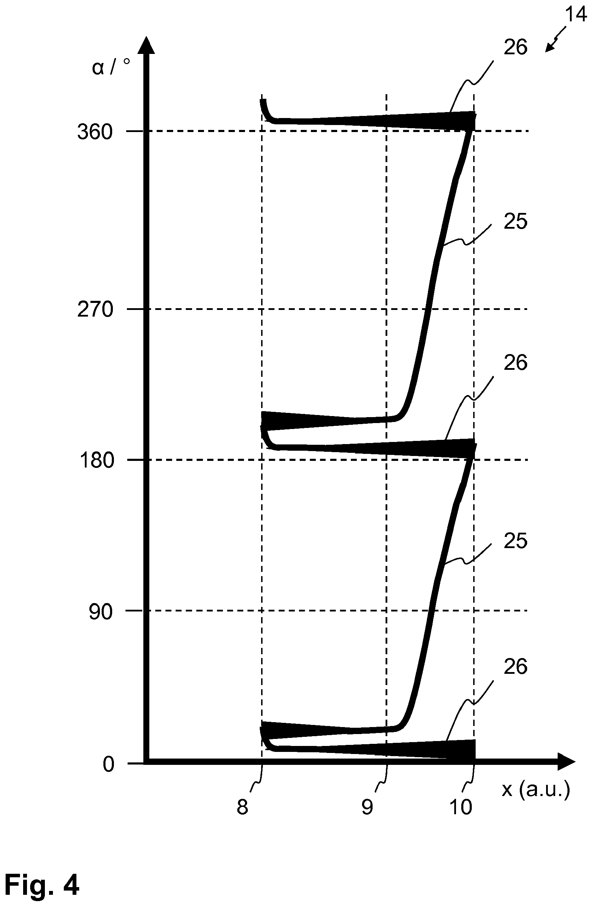

In Fig. 4 ist die Tiefe der Nut der Rotationsführung 14 des Ausführungsbeispiels aus den Fig. 1 bis 3 gezeigt. Auf der Hochachse ist ein Winkel α der Rotation der Zangenschenkel 2 um die Rotationsachse 7 in ° [Grad] aufgetragen. Auf der Rechtsachse ist eine Position x des Betätigungsglieds 6 bei translatorischer Bewegung zwischen der ersten Endstellung 8 und der zweiten Endstellung 10 gezeigt. Die Position x ist in beliebigen Einheiten eingezeichnet, was durch die Abkürzung "a.u." (*arbitraty units*) angedeutet ist. Die Zwischenstellung 9 ist eingezeichnet. In der ersten Endstellung 8 weist der erste Zweig 25 der Nut bevorzugt eine erste Tiefe auf und der zweite Zweig 26 eine zweite Tiefe, die kleiner ist als die erste Tiefe. In der zweiten Endstellung 10 weist der erste Zweig 25 der Nut bevorzugt eine dritte Tiefe auf und der zweite Zweig 26 eine vierte Tiefe, die größer ist als die dritte Tiefe. In diesem Beispiel betragen die erste Tiefe und die vierte Tiefe jeweils 4 mm [Millimeter] sowie die zweite Tiefe und die dritte Tiefe jeweils 2 mm [Millimeter].

Angenommen, ein Führungsdorn 16 befindet sich in der ersten Stellung 8 und bei 0° [Grad] in einem ersten Zweig 25 der Nut. Durch translatorische Bewegung des Betätigungsglieds 6 kann der Führungsdorn 16 entlang des ersten Zweigs 25 bewegt werden, wodurch die Zangenschenkel 2 (jedenfalls ab der Zwischenstellung 9) rotiert werden. Bei Erreichen der zweiten Endstellung 10 sind die Zangenschenkel 2 um 180° [Grad] rotiert. Der Führungsdorn 16 wechselt in einen zweiten Zweig 26 der Nut. Das kann dadurch erreicht werden, dass der zweite Zweig 26 an der zweiten Endstellung 10 tiefer ist als der erste Zweig 25. Wird das Betätigungsglied 6 nun von der zweiten Endstellung 10 in die erste Endstellung 8 (zurück) bewegt, folgt der Führungsdorn 16 dem zweiten Zweig 26. Dabei erfolgt keine Rotation. An der ersten Endstellung 8 wechselt der Führungsdorn 16 in den ersten Zweig 25. Das kann dadurch erreicht werden, dass der erste Zweig 25 an der ersten Endstellung 8 tiefer ist als der zweite Zweig 26. Durch erneutes Schließen der Zangengriffe 11 können die Zangenschenkel 2 erneut geschlossen und dabei um weitere 180° [Grad] rotiert werden. Durch anschließendes erneutes Öffnen der Zangengriffe 11 können die Zangenschenkel 2 erneut ohne Rotation geöffnet werden. Dieser Vorgang kann beliebig oft wiederholt werden.

### Bezugszeichenliste

- 1: Vorrichtung
- 2: Zangenschenkel
- 3: Greifende
- 4: Gelenkpunkt
- 5: Getriebe
- 6: Betätigungsglied
- 7: Rotationsachse
- 8: erste Endstellung
- 9: Zwischenstellung
- 10: zweite Endstellung
- 11: Zangengriff
- 12: Getriebekörper
- 13: rampenartige Führung
- 14: Rotationsführung
- 15: Gestänge
- 16: Führungsdorn
- 17: Führungsende
- 18: Getriebegehäuse
- 19: Betätigungsanordnung
- 20: Greifer
- 21: Zangenanordnung
- 22: Rotationswinkel
- 23: Greifbacke
- 24: Rolle
- 25: erster Zweig
- 26: zweiter Zweig
- 27: Öffnungswinkel

## Patentansprüche

1. Vorrichtung (1) zum Greifen und Rotieren eines Objekts aufweisend zumindest:
- zwei Zangenschenkel (2), die an einem Gelenkpunkt (4) miteinander verbunden sind,
- ein Getriebe (5), das mit den zwei Zangenschenkeln (2) verbunden ist, und
- ein Betätigungsglied (6), das mit dem Getriebe (5) verbunden ist,
wobei eine erste translatorische Bewegung des Betätigungsglieds (6) durch das Getriebe (5) derart umgewandelt wird, dass die Zangenschenkel (2) zueinander verschwenkbar sind, **gekennzeichnet dadurch, dass** die Zangenschenkel (2) durch die erste translatorische Bewegung des Betätigungsglieds (6) auch um eine den Gelenkpunkt (4) umfassende Rotationsachse (7) rotierbar sind.

2. Vorrichtung (1) nach Anspruch 1, wobei die Zangenschenkel (2) durch eine der ersten translatorischen Bewegung entgegengesetzte zweite translatorische Bewegung des Betätigungsglieds (6) ohne Rotation zueinander verschwenkbar sind.

3. Vorrichtung (1) nach einem der vorhergehenden Ansprüche, wobei das Betätigungsglied (6) zwischen einer ersten Endstellung (8) und einer zweiten Endstellung (10) translatorisch verstellbar ist, wobei die Zangenschenkel (2) geöffnet sind, wenn sich das Betätigungsglied (6) in der ersten Endstellung (8) befindet, wobei die Zangenschenkel (2) durch die erste translatorische Bewegung des Betätigungsglieds (6) von der ersten Endstellung (8) in eine Zwischenstellung (9) schließbar sind, und wobei die Zangenschenkel (2) weiterhin durch die erste translatorische Bewegung des Betätigungsglieds (6) von der Zwischenstellung (9) in die zweite Endstellung (10) um die Rotationsache (7) rotierbar sind.

4. Vorrichtung (1) nach einem der vorhergehenden Ansprüche, wobei die Zangenschenkel (2) um einen Rotationswinkel (22) im Bereich von 90° bis 270° [Grad] rotierbar sind.

5. Vorrichtung (1) nach einem der vorhergehenden Ansprüche, weiterhin aufweisend zwei Zangengriffe (11), die derart miteinander und mit dem Betätigungsglied (6) verbunden sind, dass das Betätigungsglied (6) durch Verschwenken der Zangengriffe (11) zueinander translatorisch bewegbar ist.

6. Vorrichtung (1) nach einem der vorhergehenden Ansprüche, wobei das Getriebe (5) zumindest einen Getriebekörper (12) umfasst, der mit dem Betätigungsglied (6) verbunden ist und der zumindest eine rampenartige Führung (13) aufweist, in die Führungsenden (17) der Zangenschenkel (2) derart eingreifen, dass die Zangenschenkel (2) durch eine translatorische Bewegung des Betätigungsglieds (6) zueinander verschwenkbar sind.

7. Vorrichtung (1) nach Anspruch 6, wobei der Getriebekörper (12) weiterhin mindestens eine Rotationsführung (14) zur Rotation der Zangenschenkel (2) um die Rotationsachse (7) aufweist.

8. Vorrichtung (1) nach einem der vorhergehenden Ansprüche, wobei der Getriebekörper (12) mit einem Getriebegehäuse (18) eine Kulissenführung zur Rotation der Zangenschenkel (2) um die Rotationsache (7) bildet, und wobei der Getriebekörper mit den Führungsenden (17) der Zangenschenkel (2) eine Kulissenführung zum Verschwenken der Zangenschenkel (2) zueinander bildet.

9. Zangenanordnung (21) umfassend eine Betätigungsanordnung (19) und einen Greifer (20), wobei die Betätigungsanordnung (19) derart mit dem Greifer (20) verbunden ist, dass der Greifer (20) durch Aktivieren der Betätigungsanordnung (19) eine Greifbewegung und eine Rotationsbewegung durchführt und dass der Greifer (20) durch Deaktivieren der Betätigungsvorrichtung (19) eine der Greifbewegung entgegengesetzte Bewegung ohne Rotation durchführt.

10. Zangenanordnung (21) nach Anspruch 9 umfassend eine Vorrichtung (1) nach einem der Ansprüche 1 bis 8.

11. Verwendung einer Zangenanordnung (21) nach Anspruch 9 oder 10 zum Greifen und Rotieren eines Lebensmittels.

## Claims

1. A device (1) for gripping and rotating an object, comprising at least:
- two tong legs (2), which are connected to one another at an articulation point (4),
- a gear mechanism (5), which is connected to the two tong legs (2), and
- an actuating element (6), which is connected to the gear mechanism (5),
wherein a first translational movement of the actuating element (6) is converted by the gear mechanism (5) in such a way that the tong legs (2) can be pivoted toward one another, **characterized in that** the tong legs (2) can also be rotated about an axis of rotation (7) comprising the articulation point (4) by the first translational movement of the actuating element (6).

2. The device (1) according to claim 1, wherein the tong legs (2) can be pivoted toward one another by a second translational movement of the actuating element (6) opposite the first translational movement without rotation.

3. The device (1) according to any of the preceding claims, wherein the actuating element (6) is adjustable by translational movement between a first end position (8) and a second end position (10), wherein the tong legs (2) are opened when the actuating element (6) is in the first end position (8), wherein the tong legs (2) can be closed by the first translational movement of the actuating element (6) from the first end position (8) into an intermediate position (9), and wherein the tong legs (2) are additionally rotatable about the axis of rotation (7) by the first translational movement of the actuating element (6) from the intermediate position (9) into the second end position (10).

4. The device (1) according to any of the preceding claims, wherein the tong legs (2) can be rotated by an angle of rotation (22) in the range of 90° to 270° [degree].

5. The device (1) according to any of the preceding claims, additionally comprising two tong handles (11), which are connected to one another and to the actuating element (6) in such a way that the actuating element (6) can be moved by pivoting the tong handles (11) toward one another by translational movement.

6. The device (1) according to any of the preceding claims, wherein the gear mechanism (5) comprises at least one gear body (12), which is connected to the actuating element (6) and has at least one ramp-type guide (13), in which guide ends (17) of the tong legs (2) engage in such a way that the tong legs (2) can be pivoted toward one another by a translational movement of the actuating element (6).

7. The device (1) according to claim 6, wherein the gear body (12) additionally has at least one rotational guide (14) for rotation of the tong legs (2) about the axis of rotation (7).

8. The device (1) according to any of the preceding claims, wherein the gear body (12) together with a gear case (18) forms a slotted guide for rotation of the tong legs (2) about the axis of rotation (7), and wherein the gear body together with the guide ends (17) of the tong legs (2) forms a slotted guide for pivoting the tong legs (2) toward one another.

9. A tong configuration (21), comprising an actuating configuration (19) and a gripper (20), wherein the actuating configuration (19) is connected to the gripper (20) in such a way that the gripper (20) carries out a gripping movement and a rotational movement by activation of the actuating configuration (19), and in that the gripper (20) carries out a movement opposing the gripping movement without rotation by deactivating the actuating device (19).

10. The tong configuration (21) according to claim 9, comprising a device (1) according to any of claims 1 to 8.

11. A use of a tong configuration (21) according to claim 9 or 10 for gripping and rotating a food item.

## Revendications

1. Dispositif (1) de préhension et de rotation d'un objet, présentant au moins:
- deux branches de pince (2) qui sont connectées l'une à l'autre au niveau d'un point d'articulation (4),
- un mécanisme de transmission (5) qui est connecté aux deux branches de pince (2), et
- un organe d'actionnement (6) qui est connecté au mécanisme de transmission (5),
un premier déplacement de translation de l'organe d'actionnement (6) étant converti par le mécanisme de transmission (5) de telle sorte que les branches de pince (2) puissent être pivotées l'une par rapport à l'autre,
**caractérisé en ce que**
les branches de pince (2) peuvent également être tournées autour d'un axe de rotation (7) comprenant le point d'articulation (4) par le premier déplacement de translation de l'organe d'actionnement (6).

2. Dispositif (1) selon la revendication 1, dans lequel les branches de pince (2) peuvent être pivotées l'une par rapport à l'autre sans rotation par un deuxième déplacement de translation de l'organe d'actionnement (6) opposé au premier déplacement de translation.

3. Dispositif (1) selon l'une quelconque des revendications précédentes, dans lequel l'organe d'actionnement (6) peut être déplacé en translation entre une première position extrême (8) et une deuxième position extrême (10), les branches de pince (2) étant ouvertes lorsque l'organe d'actionnement (6) se trouve dans la première position extrême (8), les branches de pince (2) pouvant être fermées par le premier déplacement de translation de l'organe d'actionnement (6) de la première position extrême (8) à une position intermédiaire (9), et les branches de pince (2) pouvant en outre être tournées autour de l'axe de rotation (7) par le premier déplacement de translation de l'organe d'actionnement (6) de la position intermédiaire (9) à la deuxième position extrême (10).

4. Dispositif (1) selon l'une quelconque des revendications précédentes, dans lequel les branches de pince (2) peuvent tourner autour d'un angle de rotation (22) dans une plage de 90° à 270° [degrés].

5. Dispositif (1) selon l'une quelconque des revendications précédentes, présentant en outre deux poignées de pince (11) qui sont connectées l'une à l'autre et à l'organe d'actionnement (6) de telle sorte que l'organe d'actionnement (6) puisse être déplacé en translation par pivotement des poignées de pince (11) l'une par rapport à l'autre.

6. Dispositif (1) selon l'une quelconque des revendications précédentes, dans lequel le mécanisme de transmission (5) comprend au moins un corps de mécanisme de transmission (12) qui est connecté à l'organe d'actionnement (6) et qui présente au moins un guide de type rampe (13) dans lequel des extrémités de guidage (17) des branches de pince (2) s'engagent de telle sorte que les branches de pince (2) puissent pivoter l'une par rapport à l'autre par un déplacement de translation de l'organe d'actionnement (6).

7. Dispositif (1) selon la revendication 6, dans lequel le corps de mécanisme de transmission (12) présente en outre au moins un guide de rotation (14) pour la rotation des branches de pince (2) autour de l'axe de rotation (7).

8. Dispositif (1) selon l'une quelconque des revendications précédentes, dans lequel le corps de mécanisme de transmission (12) forme avec un boîtier de mécanisme de transmission (18) un guide à coulisse pour la rotation des branches de pince (2) autour de l'axe de rotation (7), et dans lequel le corps de mécanisme de transmission forme avec les extrémités de guidage (17) des branches de pince (2) un guide à coulisse pour faire pivoter les branches de pince (2) l'une par rapport à l'autre.

9. Agencement de pince (21) comprenant un agencement d'actionnement (19) et un dispositif de préhension (20), l'agencement d'actionnement (19) étant connecté au dispositif de préhension (20) de telle sorte que le dispositif de préhension (20), par activation de l'agencement d'actionnement (19), effectue un mouvement de préhension et un mouvement de rotation, et que le dispositif de préhension (20), par désactivation du dispositif d'actionnement (19), effectue un mouvement opposé au mouvement de préhension, sans rotation.

10. Agencement de pince (21) selon la revendication 9, comprenant un dispositif (1) selon l'une quelconque des revendications 1 à 8.

11. Utilisation d'un agencement de pince (21) selon la revendication 9 ou la revendication 10 pour la préhension et la rotation d'un produit alimentaire.
